# EUROPEAN PATENT SPECIFICATION

(11) **EP 2 140 664 B1**
(45) Date of publication and mention of the grant of the patent: **12.08.2015**
(21) Application number: 07727514.7
(22) Date of filing: 29.03.2007
(51) Int. Cl.: H04L 29/08, H04L 29/12

(54) **METHOD AND APPARATUS FOR USE IN A COMMUNICATIONS NETWORK**
VERFAHREN UND VORRICHTUNG ZUR VERWENDUNG IN EINEM KOMMUNIKATIONSNETZ
PROCÉDÉ ET APPAREIL DESTINÉS À ÊTRE UTILISÉS DANS UN RÉSEAU DE COMMUNICATIONS

(43) Date of publication of application: 06.01.2010
(73) Proprietor: Telefonaktiebolaget LM Ericsson (publ), 164 83 Stockholm (SE)
(72) Inventor: BOBERG, Christer, S-137 55 Tungelsta (SE); ALBERTSSON, Henrik, S-118 24 Stockholm (SE); LINDGREN, Anders, S-125 74 Älvsjö (SE); LINDGREN, Hans, S-125 43 Älvsjö (SE); HOLM, Jan, SE-803 10 Gävle (SE)
(74) Representative: Blake, Stephen James
(86) International application number: PCT/EP2007/053042
(87) International publication number: WO 2008/119377

(56) References cited:
- WO-A-2005/015870
- ASHIR AHMED GINGA KAWAGUCHI SATOSHI TOKUNO SHINJI OKUMURA SOFTFRONT: "A guideline on message headers and URI in SIP/SIMPLE framework; draft-ashir-simple-message-guideline-00.tx t;" IETF STANDARD-WORKING-DRAFT, INTERNET ENGINEERING TASK FORCE, IETF, CH, 9 February 2004 (2004-02-09), XP015010367 ISSN: 0000-0004
- ROSENBERG CISCO SYSTEMS J: "A Data Model for Presence; draft-ietf-simple-presence-data-model-07.t xt" IETF STANDARD-WORKING-DRAFT, INTERNET ENGINEERING TASK FORCE, IETF, CH, vol. simple, no. 7, 22 January 2006 (2006-01-22), XP015044134 ISSN: 0000-0004

## Description

### Technical field

The present invention relates to a method and apparatus for use in a communications network, for example a Universal Mobile Telecommunications System having an IP Multimedia Subsystem.

### Background

IP Multimedia services provide a dynamic combination of voice, video, messaging, data, etc. within the same session. By growing the number of basic applications and the media which it is possible to combine, the number of services offered to the end users will grow, and the inter-personal communication experience will be enriched. This will lead to a new generation of personalised, rich multimedia communication services, including so-called "combinational IP Multimedia" services.

The UMTS (Universal Mobile Telecommunications System) is a third generation wireless system designed to provide higher data rates and enhanced services to subscribers. UMTS is a successor to the Global System for Mobile Communications (GSM), with an important evolutionary step between GSM and UMTS being the General Packet Radio Service (GPRS). GPRS introduces packet switching into the GSM core network and allows direct access to packet data networks (PDNs). This enables high-data rate packets switch transmissions well beyond the 64 kbps limit of ISDN through the GSM call network, which is a necessity for UMTS data transmission rates of up to 2 Mbps. UMTS is standardised by the 3^{rd} Generation Partnership Project (3GPP) which is a conglomeration of regional standards bodies such as the European Telecommunication Standards Institute (ETSI), the Association of Radio Industry Businesses (ARIB) and others. See 3GPP TS 23.002 for more details.

The UMTS architecture includes a subsystem known as the IP Multimedia Subsystem (IMS) for supporting traditional telephony as well as new IP multimedia services (3GPP TS 22.228, TS 23.228, TS 24.229, TS 29.228, TS 29.229, TS 29.328 and TS 29.329 Releases 5 to 7). IMS provides key features to enrich the end-user person-to-person communication experience through the use of standardised IMS Service Enablers, which facilitate new rich person-to-person (client-to-client) communication services as well as person-to-content (client-to-server) services over IP-based networks. The IMS is able to connect to both PSTN/ISDN (Public Switched Telephone Network/Integrated Services Digital Network) as well as the Internet.

The IMS makes use of the Session Initiation Protocol (SIP) to set up and control calls or sessions between user terminals (or user terminals and application servers). The Session Description Protocol (SDP), carried by SIP signalling, is used to describe and negotiate the media components of the session. Whilst SIP was created as a user-to-user protocol, IMS allows operators and service providers to control user access to services and to charge users accordingly. The 3GPP has chosen SIP for signalling between a User Equipment (UE) and the IMS as well as between the components within the IMS.

Specific details of the operation of the UMTS communications network and of the various components within such a network can be found from the Technical Specifications for UMTS that are available from http://www.3gpp.org. Further details of the use of SIP within UMTS can be found from the 3GPP Technical Specification TS 24.228 V5.8.0 (2004-03).

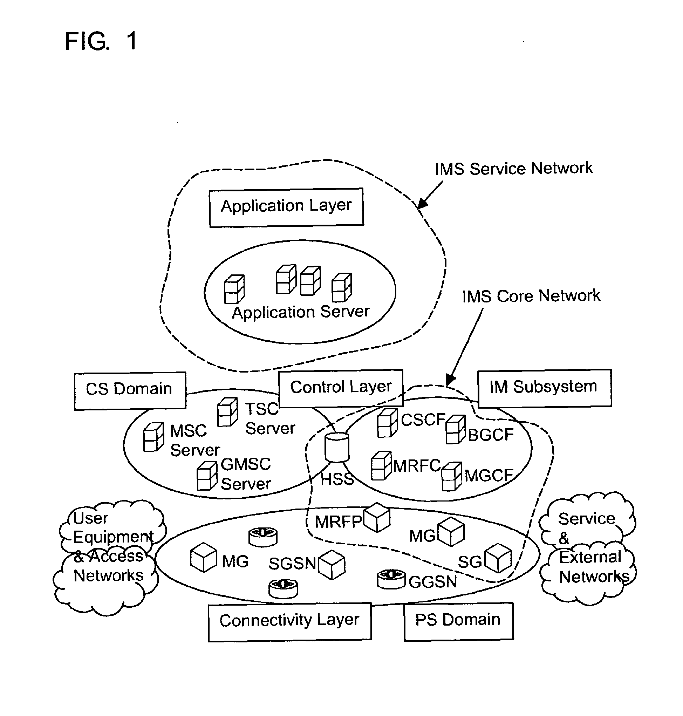

Figure 1 of the accompanying drawings illustrates schematically how the IMS fits into the mobile network architecture in the case of a GPRS/PS access network (IMS can of course operate over other access networks). Call/Session Control Functions (CSCFs) operate as SIP proxies within the IMS. The 3GPP architecture defines three types of CSCFs: the Proxy CSCF (P-CSCF) which is the first point of contact within the IMS for a SIP terminal; the Serving CSCF (S-CSCF) which provides services to the user that the user is subscribed to; and the Interrogating CSCF (I-CSCF) whose role is to identify the correct S-CSCF and to forward to that S-CSCF a request received from a SIP terminal via a P-CSCF.

A user registers with the IMS using the specified SIP REGISTER method. This is a mechanism for attaching to the IMS and announcing to the IMS the address at which a SIP user identity can be reached. In 3GPP, when a SIP terminal performs a registration, the IMS authenticates the user, and allocates an S-CSCF to that user from the set of available S-CSCFs. Whilst the criteria for allocating S-CSCFs is not specified by 3GPP, these may include load sharing and service requirements. It is noted that the allocation of an S-CSCF is key to controlling (and charging for) user access to IMS-based services. Operators may provide a mechanism for preventing direct user-to-user SIP sessions which would otherwise bypass the S-CSCF.

During the registration process, it is the responsibility of the I-CSCF to select an S-CSCF if an S-CSCF is not already selected. The I-CSCF receives the required S-CSCF capabilities from the home network's Home Subscriber Server (HSS), and selects an appropriate S-CSCF based on the received capabilities. [It is noted that S-CSCF allocation is also carried out for a user by the I-CSCF in the case where the user is called by another party, and the user is not currently allocated an S-CSCF.] When a registered user subsequently sends a session request to the IMS, the P-CSCF is able to forward the request to the selected S-CSCF based on information received from the S-CSCF during the registration process.

Within the IMS service network, Application Servers (ASs) are provided for implementing IMS service functionality. Application Servers provide services to end-users in an IMS system, and may be connected either as end-points over the 3GPP defined Mr interface, or "linked in" by an S-CSCF over the 3GPP defined ISC interface. In the latter case, Initial Filter Criteria (IFC) are used by an S-CSCF to determine which Applications Servers should be "linked in" during a SIP Session establishment. Different IFCs may be applied to different call cases. The IFCs are received by the S-CSCF from an HSS during the IMS registration procedure as part of a user's User Profile. Certain Application Servers will perform actions dependent upon subscriber identities (either the called or calling subscriber, whichever is "owned" by the network controlling the Application Server). For example, in the case of call forwarding, the appropriate (terminating) application server will determine the new terminating party to which a call to a given subscriber will be forwarded. In the case that an IFC indicates that a SIP message received at the S-CSCF should be forwarded to a particular SIP AS, that AS is added into the message path. Once the SIP message is returned by the AS to the S-CSCF, it is forwarded on towards its final destination, or forwarded to another AS if this is indicated in the IFCs.

There is a high demand on availability for services provided in telecommunications networks. In order to provide the required level of availability, several mechanisms are implemented in the network nodes, as well designed for in the network architecture.

One of the mechanisms required is the ability for a node to be informed of other nodes' availability, as well as whether some of those have been restarted.

This kind of functionality is often part of a bigger "restoration procedure" that also covers the action taken when a node is down, as well as when a node comes back into operation.

The current IMS implementation and standard (3GPP) lack a mechanism for restoration procedures, and hence also a mechanism for detecting the ability of nodes to handle already established SIP traffic (existing SIP sessions) is not provided for.

One possibility would be to use O&M (Operation and Maintenance) mechanisms; however that is likely to be a proprietary solution, with drawbacks of inflexibility.

It is desirable to address the above-identified issues.

The IETF Internet Draft "A guideline on message headers and URI in SIP/SIMPLE framework" (draft-ashir-simple-message-guideline-00.txt) by Ashir Amed et al (9 February 2004) discloses a method in which node status information is published by a node using a SIP PUBLISH message, with that node status information being distributed to those nodes that have subscribed to updates from that node using a SIP SUBSCRIBE message.

WO 2005/015870 discloses the use of a service-ID, having a URI format, representing a group of users, with a user able to subscribe to updates from the group of users using a SIP SUBSCRIBE message.

### Summary

According to a first aspect of the present invention there is provided a method of distributing node status information in a telecommunications network that makes use of the Session Initiation Protocol, SIP. A Node Status SIP Uniform Resource Identifier (URI) is shared amongst a plurality of nodes, the Node Status SIP URI representing a group of nodes that want to receive node status information updates from the nodes of the plurality. At a first node, of the plurality, a SIP Request is sent comprising node status information intended for all nodes in the group represented by the Node Status SIP URI, with the Node Status SIP URI being used as the Request-URI of the SIP Request so as to identify the SIP Request as comprising node status information and to identify the group of intended recipients of the node status information. At a second node: the SIP Request with the node status information and the Request-URI is received; the intended recipients of the node status information are determined from the Request-URI; and the node status information is forwarded to the determined recipients or the node status information is used at the second node if the second node is determined to be one of the intended recipients.

According to a second aspect of the present invention there is provided an apparatus for use in performing the sharing step of a method according to the first aspect of the present invention, the apparatus comprising means for sharing a Node Status SIP Uniform Resource Identifier, URI, amongst a plurality of nodes, the Node Status SIP URI representing a group of nodes that want to receive node status information updates from the nodes of the plurality.

According to a third aspect of the present invention there is provided an apparatus for use as or in the first node of a method according to the first aspect of the present invention, comprising means for sending a SIP Request comprising node status information intended for all nodes in a group represented by a shared Node Status SIP URI, with the shared Node Status SIP URI being used as the Request-URI of the SIP Request so as to identify the SIP Request as comprising node status information and to identify the group of intended recipients of the node status information.

According to a fourth aspect of the present invention there is provided an apparatus for use as or in the second node of a method according to the first aspect of the present invention, comprising means for: receiving a SIP Request comprising a Node Status SIP URI as the Request-URI of the SIP Request and node status information intended for all nodes in a group represented by the Node Status SIP URI, with the received Node Status SIP URI thereby identifying the SIP Request as comprising node status information and identifying the group of intended recipients of the node status information; determining the intended recipients of the node status information from the Request-URI; and forwarding the node status information to the determined recipients or using the node status information at the second node if the second node is determined to be one of the intended recipients.

According to a fifth aspect of the present invention there is provided a system of nodes for distributing node status information in a telecommunications network that makes use of the Session Initiation Protocol, SIP, the system being characterised by comprising: (a) means for sharing a Node Status SIP Uniform Resource Identifier, URI, amongst a plurality of nodes, the Node Status SIP URI representing a group of nodes that want to receive node status information updates from the nodes of the plurality; and at a first node, of the plurality, means for: (b)(i) receiving the shared Node Status SIP URI; and (b)(ii) sending a SIP Request comprising node status information intended for all nodes in the group represented by the Node Status SIP URI, with the received Node Status SIP URI being used as the Request-URI of the SIP Request so as to identify the SIP Request as comprising node status information and to identify the group of intended recipients of the node status information; and al a second node, means for: (c)(i) receiving the SIP Request with the node status information and the Request-URI; (c)(ii) determining the intended recipients of the node status information from the Request-URI; and (c)(iii) forwarding the node status information to the determined recipients or using the node status information at the second node if the second node is determined to be one of the intended recipients.

Optional features of the present invention are set out in the appended dependent claims.

According to a sixth aspect of the present invention there is provided a program for controlling an apparatus to perform a method according to the first aspect of the present invention, or which, when loaded into an apparatus, causes the apparatus to become an apparatus according to any of the second to fifth aspects of the present invention. The program may be carried on a carrier medium. The carrier medium may be a storage medium. The carrier medium may be a transmission medium.

According to a sixth aspect of the present invention there is provided an apparatus programmed by a program according to the fifth aspect of the present invention.

According to a seventh aspect of the present invention there is provided a storage medium containing a program according to the fifth aspect of the present invention.

### Brief description of the drawings

Figure 1, discussed hereinbefore, illustrates schematically the integration of an IP Multimedia Subsystem into a 3G mobile communications system;
Figure 2 is a block diagram for use in illustrating a first example embodying the present invention;
Figure 3 is a block diagram for use in illustrating a second example embodying the present invention;
Figure 4 is a block diagram for use in illustrating a third example embodying the present invention; and
Figures 5 and 6 are block diagrams for use in illustrating a fourth example embodying the present invention.

### Detailed description

According to an embodiment of the present invention, distribution of node status amongst the nodes of a group is achieved as follows:
1. A "Node Status SIP URI" is defined.
2. This Node Status SIP URI is shared amongst all nodes in the group.
3. Each node sends a SIP request with its status to the Node Status SIP URI, and this information is made available to all other nodes in the group.

In this way, a Node Status SIP URI is created and shared amongst the nodes in order to use as the Request URI when sending Node Status information. An example Node Status SIP URI might be "sip:nodestatus@operator.com". Only a single Node Status SIP URI for those nodes that are sharing status information need be created. In a network, it may be possible to have different subgroups sharing status information, and hence only a single Node Status SIP URI per subgroup need be created. Another alternative is to use a single Node Status SIP URI per node, providing for a more granular distribution of data; in this case it might be that only those nodes that are interested in information from a particular node are included in a trigger relating to that information.

The Node Status SIP URI is shared amongst the nodes involved in sharing Node Status information, both for posting as well as for receiving. The details of how this is achieved are not important in relation to the present invention, but sharing could be achieved, for example, by provisioning or configuration.

It is not important what SIP request is used for sending status information, but one possibility is the SIP PUBLISH request, or potentially the SIP MESSAGE request.

The benefit of the SIP PUBLISH request is the "time to live" function it has, where it is possible to use the fact that a publication times out to draw a conclusion that the node is malfunctioning.

As described in the following description, there are several alternatives to update and distribute node status information in the network.

The node status information that is to be sent can differ depending on the need and also on when the node status is updated. For example, one possibility is that the node publishes information continuously, and as long as the node is functioning the publication is refreshed with quite high frequency. If the publication times out, the receiving node knows that the node has started to malfunction and can either draw conclusions directly from that information or query the node to make sure that the information is correct. The reporting node can, alternatively or in addition, send status information when a status change has occurred, such as the node has restarted. In this case, the receiving node knows that this node may have lost important information, such as existing sessions.

Examples of node status information in different situations are: "Node was restarted at time X; all SIP dialogs routed via the following SIP addresses before time X are lost"; "Node has been running since time Y when all SIP dialogs routed via the following SIP addresses were lost"; and "Node will be stopping at time Z, and all SIP dialogs routed before time Z via the following SIP addresses will be cleared ungracefully".

It is possible that a node is tasked with storing the node status relating to all nodes identified by the Node Status URI. In this way, this information is kept in a central location, so that it is not necessary, for example, for a node to subscribe to different nodes to obtain the information. The Node Status URI "sip:nodestatus@operator.com" can therefore be considered as a virtual node that has the node status for all nodes in the group.

In general, therefore, a method of distributing node status information is proposed in which node status information is provided in a SIP Request whose Request Uniform Resource Identifier (Request-URI) enables a receiving node to determine that the SIP Request relates to or comprises node status information and/or identifies the intended recipients of the node status information.

If a SIP PUBLISH Request is used with a certain event package, then that package could serve the purpose at the receiving node of identifying the SIP Request as containing node status information, but even in that case the Request URI could still be used to identify the SIP request as containing node status information. However, if a SIP PUBLISH Request is used with event package "presence" or if a SIP MESSAGE Request is used, then the "Node Status URI" would be the means to find the correct software in the node to handle the Request.

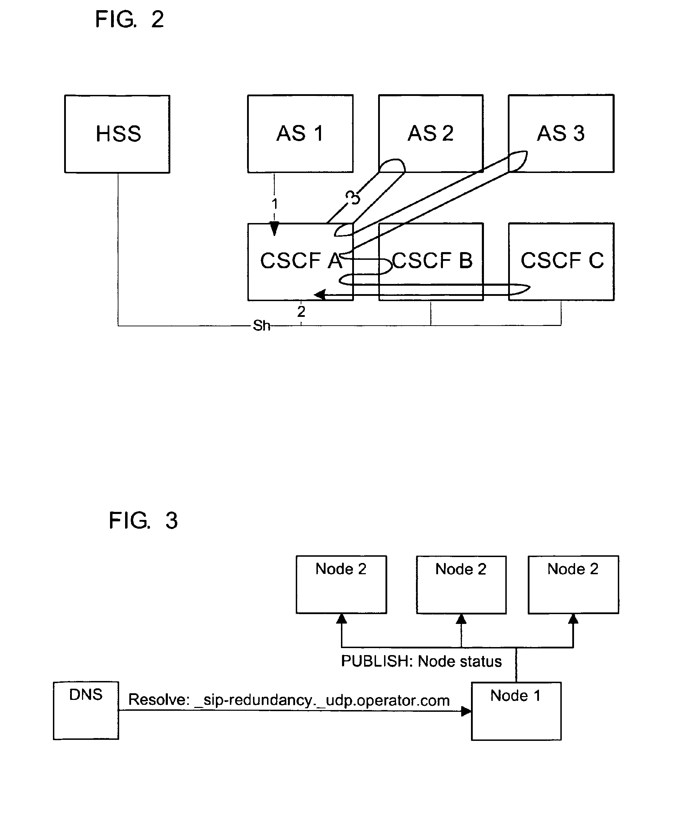

A first specific example will now be described with reference to Figure 2. The first example is based on HSS triggers.

In this example, the Node Status SIP URI is stored in a HSS in a similar manner as a normal Public User Identifier or Public Service Identifier. A trigger (such as an IFC, or Initial Filter Criteria) is associated with the Node Status SIP URI. The trigger includes addresses for all nodes that want to receive status information.

In the example shown in Figure 2, node AS1 sends status information in step 1 with a SIP request sent to CSCF A and addressed to "sip:nodestatus@operator.com". On receipt, CSCF A reads the trigger information (step 2) for that user and event package, and distributes the request to all nodes included in the trigger (step 3). In this example, the interested nodes are AS2, AS3, CSCF A, CSCF B, CSCF C.

In order to distinguish this traffic from other SIP traffic, a new Event Package is proposed.

There are several reasons why this node status information is useful:
- As a heart beat between nodes.
- To inform that a node is back (from restart).
- To inform about a new node introduced.

The body of the SIP request for the status message can contain additional information such as: "This node has been restarted, please take needed action"; "This is the first time this node send out status information" (tells the other nodes that there is a new node); and so on. This information can be expanded based on the needs of restoration procedures etc.

A second example will now be described with reference to Figure 3. The second example is based on a DNS approach. Instead of using a trigger stored in HSS as in the first example, the Node Status URI can be resolved by DNS to a number of nodes that are notified about a node status change.

In the example, the node that reports the changed node status resolves the Node Status URI; in the illustration of Figure 3 this is Node 1. One way to do this is to use a SRV query such as "_sip-redundancy._udp.operator.com" to receive a number of nodes that are notified. Node 1 then uses a SIP PUBLISH request or a SIP MESSAGE request (or some other SIP request) to notify the other nodes (Nodes 2) about the status.

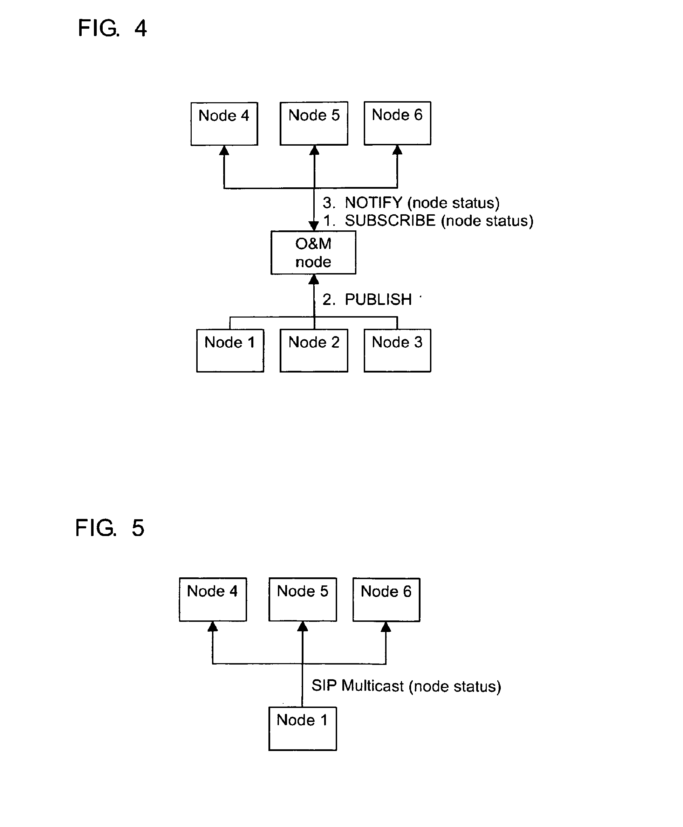

A third example will now be described with reference to Figure 4. The third example is based on a SIP SUBSCRIBE approach.

In this example, the nodes that are interested in other nodes' status will use a SIP SUBSCRIBE request to request to be notified when any changes occur. The subscription request is made towards a central O&M node using, for example, "sip:nodestatus@operator.com". This central node keeps track of the node status of different nodes, with the various nodes making the information available via, for example, a SIP PUBLISH request. This way of supplying information is similar to the standard way of using Presence in SIP.

The steps shown in Figure 4 are summarised below:
1. A node that wants to receive node status updates sends a SIP SUBSCRIBE request to the O&M node using the "sip:nodestatus@operator.com" URI.
2. The node that wants to update its node status sends e.g. a SIP PUBLISH request or a SIP MESSAGE request to the O&M node using the "sip:nodestatus@operator.com" URI with up-to-date information.
3. When a change is detected by the O&M node, the O&M node will send a SIP NOTIFY request to all "watchers" that are interested in the node status information.

Note that it would be possible for the watching node to include a filter to inform the O&M node as to what nodes it is interested in, and possibly also what type of information (such as "node restart"), and at which occasions the notification is to be sent.

As mentioned previously, an advantage of using SIP PUBLISH is that the publication times out and the O&M node can then be aware of the fact that a timed-out publication means that a node may be malfunctioning. The O&M node could in this case also query the node to get the latest status or to check whether the node is actually down.

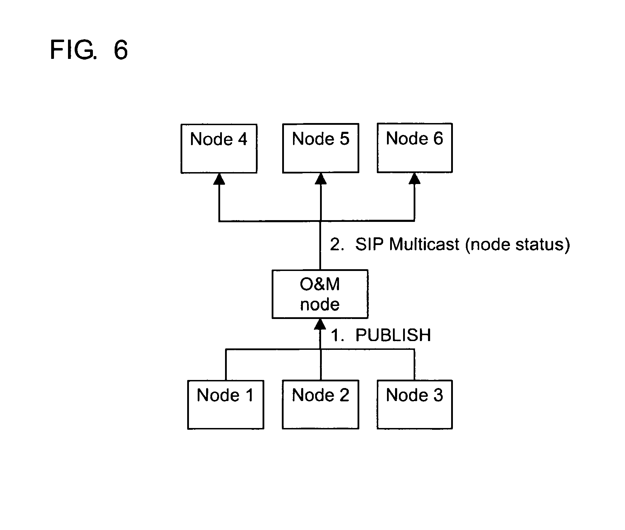

A fourth example will now be described with reference to Figures 5 and 6. The fourth example is a multicast-based approach.

A multicast approach can either be used in a situation where the reporting node uses the SIP Multicast address to inform all nodes with an interest in node status, or it can be an O&M server (as in the third example described above) that uses the SIP Multicast to inform other nodes about node status.

Figure 5 illustrates the case where Node 1 uses the SIP Multicast to send a node status message to all other nodes listening to the multicast address. The Node Status URI is used at the receiving node to differentiate this SIP message from other SIP messages sent using multicast. This means that the receiving node uses the Request URI to determine that the SIP message is a "Node Status message". In effect, the "Node Status function" in the node can be addressed by using this Node Status URI. Each node decides if the information is used or not.

Advantages of this solution compared to other solutions are that just one message is sent, and no central node is needed. One disadvantage (which can be avoided with using e.g. Subscribe with filters) is that the receiving node has to check the message to see if it is of any interest.

A variant is then to use a central node, where the node is updated using any appropriate method such as the SIP PUBLISH method, but then the central node uses SIP Multicast to inform all other nodes about changed node status. This is illustrated in Figure 6.

Note that this alternative can be combined with the SUBSCRIBE based solution so that the O&M node supports both subscriptions as well as uses Multicast.

A fifth example will now be described. The fifth example uses a subscription-based distributed monitoring approach.

In this example, a SIP PUBLISH request or SIP MESSAGE request (or other type of request) is used to inform other nodes about the existence of a node, the status of it and future status changes. These can be monitored by subscribing to the status of the node directly using the SIP SUBSCRIBE/NOTIFY method to transport the detailed status information.

In this way, each node is effectively acting as its own "NodeStatus Notifier" Server, and the SIP PUBLISH/MESSAGE request is mainly used to inform the SIP address to a node that can be monitored. The method used to distribute this message can be any of the methods described above in the above-described HSS trigger based approach (first example), subscribe based approach (third example) and multicast based approach (fourth example). The SIP address to a node to monitor can also be obtained by a node by other means like configuration or by extracting the SIP address to nodes of interest from the SIP signalling passing the node and then via try and error found out if the node can act as a "NodeStatus" Notifier.

With an embodiment of the present invention, existing IMS mechanisms are used to achieve a smooth distribution of node status information. This can then be used for example by restoration procedures and so on.

It will be appreciated that operation of one or more of the above-described components can be controlled by a program operating on the device or apparatus. Such an operating program can be stored on a computer-readable medium, or could, for example, be embodied in a signal such as a downloadable data signal provided from an Internet website. The appended claims are to be interpreted as covering an operating program by itself, or as a record on a carrier, or as a signal, or in any other form.

It will also be appreciated by the person of skill in the art that various modifications may be made to the above-described embodiments without departing from the scope of the present invention as defined by the appended claims. In particular, it will be appreciated that, although described in relation to a Universal Mobile Telecommunications System having an IP Multimedia Subsystem, the present invention is also applicable to other types of network.

## Claims

1. A method of distributing node status information in a telecommunications network that makes use of the Session Initiation Protocol, SIP, the method being **characterised by** comprising:
(a) sharing a Node Status SIP Uniform Resource Identifier, URI, amongst a plurality of nodes, the Node Status SIP URI representing a group of nodes that want to receive node status information updates from the nodes of the plurality; and
at a first node, of the plurality:
(b) sending a SIP Request comprising node status information intended for all nodes in the group represented by the Node Status SIP URI, with the Node Status SIP URI being used as the Request-URI of the SIP Request so as to identify the SIP Request as comprising node status information and to identify the group of intended recipients of the node status information; and
at a second node:
(c)(i) receiving the SIP Request with the node status information and the Node Status SIP URI;
(c)(ii) determining the intended recipients of the node status information from the Node Status SIP URI; and
(c)(iii) forwarding the node status information to the determined recipients or using the node status information at the second node if the second node is determined to be one of the intended recipients.

2. A method as claimed in claim 1, comprising referring to an Initial Filter Criteria associated with the Request URI to determine the intended recipients from the Request-URI.

3. A method as claimed in claim 1, comprising referring to a Dynamic Name Server to determine the intended recipients from the Request URI.

4. A method as claimed in claim 1, comprising determining the intended recipients in dependence upon one or more previously-received SIP SUBSCRIBE Requests having the Node Status SIP URI as the Request-URI.

5. A method as claimed in any preceding claim, wherein the SIP Request is a SIP PUBLISH Request

6. A method as claimed in claim 5, comprising using the time to live information from the SIP PUBLISH Request to infer further information about the node status

7. A method as claimed in any one of claims 1 to 4, wherein the SIP Request is a SIP MESSAGE request.

8. A method as claimed in any preceding claim, comprising storing the node status relating to those nodes identified by the SIP Request URI.

9. A method as claimed in any preceding claim, wherein the network is a Universal Mobile Telecommunications System comprising an IP Multimedia Subsystem, IMS.

10. A system of nodes for distributing node status information in a telecommunications network that makes use of the Session Initiation Protocol, SIP, the system being **characterised by** comprising:
(a) means for sharing a Node Status SIP Uniform Resource Identifier, URI, amongst a plurality of nodes, the Node Status SIP URI representing a group of nodes that want to receive node status information updates from the nodes of the plurality; and
at a first node, of the plurality, means for:
(b)(i) receiving the shared Node Status SIP URI; and
(b)(ii) sending a SIP Request comprising node status information intended for all nodes in the group represented by the Node Status SIP URI, with the received Node Status SIP URI being used as the Request-URI of the SIP Request so as to identify the SIP Request as comprising node status information and to identify the group of intended recipients of the node status information; and
at a second node, means for:
(c)(i) receiving the SIP Request with the node status information and the Node Status SIP URI;
(c)(ii) determining the intended recipients of the node status information from the Node Status SIP URI; and
(c)(iii) forwarding the node status information to the determined recipients or using the node status information at the second node if the second node is determined to be one of the intended recipients.

## Patentansprüche

1. Verfahren zum Verteilen von Knotenstatusinformation in einem Telekommunikationsnetz, das das Session Initiation Protocol, SIP, verwendet, wobei das Verfahren **dadurch gekennzeichnet ist, dass** es Folgendes umfasst:
(a) gemeinsame Nutzung eines Knotenstatus-SIP-URI(einheitlicher Ressourcen-Identifikator) durch eine Vielzahl von Knoten, wobei der Knotenstatus-SIP-URI eine Gruppe von Knoten repräsentiert, die von den Knoten der Vielzahl Aktualisierungen der Knotenstatusinformation empfangen wollen; und
an einem ersten Knoten der Vielzahl:
(b) Senden einer SIP-Anforderung, Knotenstatusinformation umfassend, die für alle Knoten in der Gruppe beabsichtigt ist, die durch den Knotenstatus-SIP-URI repräsentiert sind, wobei der Knotenstatus-SIP-URI als der Anforderungs-URI der SIP-Anforderung verwendet wird, um die SIP-Anforderung dahingehend zu identifizieren, dass sie Knotenstatusinformation umfasst, und die Gruppe von beabsichtigten Empfängern der Knotenstatusinformation zu identifizieren; und
an einem zweiten Knoten:
(c) (i) Empfangen der SIP-Anforderung mit der Knotenstatusinformation und dem Knotenstatus-SIP-URI;
(c) (ii) Bestimmen der beabsichtigten Empfänger der Knotenstatusinformation aus dem Knotenstatus-SIP-URI; und
(c) (iii) Weiterleiten der Knotenstatusinformation an die bestimmten Empfänger oder Verwenden der Knotenstatusinformation am zweiten Knoten, falls bestimmt wird, dass der zweite Knoten einer der beabsichtigten Empfänger ist.

2. Verfahren nach Anspruch 1, umfassend, dass auf mit dem Anforderungs-URI assoziierte anfängliche Filterkriterien Bezug genommen wird, um die beabsichtigten Empfänger aus dem Anforderungs-URI zu bestimmen.

3. Verfahren nach Anspruch 1, umfassend, dass auf einen dynamischen Namensserver Bezug genommen wird, um die beabsichtigten Empfänger aus dem Anforderungs-URI zu bestimmen.

4. Verfahren nach Anspruch 1, umfassend, dass die beabsichtigten Empfänger in Abhängigkeit von einer oder mehreren vorher empfangenen SIP SUBSCRIBE-Anforderungen bestimmt werden, die den Knotenstatus-SIP-URI als den Anforderungs-URI haben.

5. Verfahren nach einem vorhergehenden Anspruch, worin die SIP-Anforderung eine SIP PUBLISH-Anforderung ist.

6. Verfahren nach Anspruch 5, umfassend, dass Lebenszeit-Information aus der SIP PUBLISH-Anforderung verwendet wird, um auf weitere Information über den Knotenstatus zu schließen.

7. Verfahren nach einem der Ansprüche 1 bis 4, worin die SIP-Anforderung eine SIP MESSAGE-Anforderung ist.

8. Verfahren nach einem vorhergehenden Anspruch, umfassend, dass der Knotenstatus gespeichert wird, der sich auf solche Knoten bezieht, die durch den SIP-Anforderungs-URI identifiziert werden.

9. Verfahren nach einem vorhergehenden Anspruch, worin das Netz ein universelles mobiles Telekommunikationssystem ist, das ein IP Multimedia Subsystem, IMS, umfasst.

10. System von Knoten zum Verteilen von Knotenstatusinformation in einem Telekommunikationsnetz, das das Session Initiation Protocol, SIP, verwendet, wobei das System **dadurch gekennzeichnet ist, dass** es Folgendes umfasst:
(a) ein Mittel zur gemeinsamen Nutzung eines Knotenstatus-SIP-URI(einheitlicher Ressourcen-Identifikator) durch eine Vielzahl von Knoten, wobei der Knotenstatus-SIP-URI eine Gruppe von Knoten repräsentiert, die von den Knoten der Vielzahl Aktualisierungen der Knotenstatusinformation empfangen wollen; und
an einem ersten Knoten der Vielzahl ein Mittel zum:
(b) (i) Empfangen des gemeinsam genutzten Knotenstatus-SIP-URI; und
(b) (ii) Senden einer SIP-Anforderung, Knotenstatusinformation umfassend, die für alle Knoten in der Gruppe beabsichtigt ist, die durch den Knotenstatus-SIP-URI repräsentiert sind, wobei der Knotenstatus-SIP-URI als der Anforderungs-URI der SIP-Anforderung verwendet wird, um die SIP-Anforderung dahingehend zu identifizieren, dass sie Knotenstatusinformation umfasst, und die Gruppe von beabsichtigten Empfängern der Knotenstatusinformation zu identifizieren; und
an einem zweiten Knoten ein Mittel zum:
(c) (i) Empfangen der SIP-Anforderung mit der Knotenstatusinformation und dem Knotenstatus-SIP-URI;
(c) (ii) Bestimmen der beabsichtigten Empfänger der Knotenstatusinformation aus dem Knotenstatus-SIP-URI; und
(c) (iii) Weiterleiten der Knotenstatusinformation an die bestimmten Empfänger oder Verwenden der Knotenstatusinformation am zweiten Knoten, falls bestimmt wird, dass der zweite Knoten einer der beabsichtigten Empfänger ist.

## Revendications

1. Procédé de distribution d'informations d'état de noeud dans un réseau de télécommunication qui utilise le protocole d'ouverture de session, SIP, le procédé étant **caractérisé en ce qu'**il comporte les étapes ci-dessous consistant à :
(a) partager un identifiant de ressource uniforme, URI, de protocole SIP d'état de noeud, parmi une pluralité de noeuds, l'identifiant URI de protocole SIP d'état de noeud représentant un groupe de noeuds qui souhaitent recevoir des mises à jour d'informations d'état de noeud des noeuds de la pluralité ; et
au niveau d'un premier noeud de la pluralité :
(b) envoyer une demande de protocole SIP, comprenant des informations d'état de noeud, destinée à tous les noeuds dans le groupe représentés par l'identifiant URI de protocole SIP d'état de noeud, où l'identifiant URI de protocole SIP d'état de noeud est utilisé en tant que l'identifiant URI de demande de la demande de protocole SIP de manière à identifier la demande de protocole SIP comme comprenant des informations d'état de noeud et à identifier le groupe de destinataires prévus des informations d'état de noeud ; et
au niveau d'un second noeud :
(c) (i) recevoir la demande de protocole SIP avec les informations d'état de noeud et l'identifiant URI de protocole SIP d'état de noeud ;
(c) (ii) déterminer les destinataires prévus des informations d'état de noeud à partir de l'identifiant URI de protocole SIP d'état de noeud ; et
(c) (iii) acheminer les informations d'état de noeud aux destinataires déterminés ou utiliser les informations d'état de noeud au niveau du second noeud si le second noeud est déterminé comme étant l'un des destinataires prévus.

2. Procédé selon la revendication 1, comprenant l'étape consistant à faire référence à un critère de filtre initial associé à l'identifiant URI de demande en vue de déterminer les destinataires prévus à partir de l'identifiant URI de demande.

3. Procédé selon la revendication 1, comprenant l'étape consistant à faire référence à un serveur de nom dynamique en vue de déterminer les destinataires prévus à partir de l'identifiant URI de demande.

4. Procédé selon la revendication 1, comprenant l'étape consistant à déterminer les destinataires prévus en fonction d'une ou plusieurs demandes d'abonnement SIP « SIP SUBSCRIBE » précédemment reçues présentant l'identifiant URI de protocole SIP d'état de noeud en tant que l'identifiant URI de demande.

5. Procédé selon l'une quelconque des revendications précédentes, dans lequel la demande de protocole SIP est une demande de publication SIP « SIP PUBLISH ».

6. Procédé selon la revendication 5, comprenant l'étape consistant à utiliser des informations de durée de vie à partir de la demande de publication SIP « SIP PUBLISH » en vue de déduire des informations supplémentaires sur l'état de noeud.

7. Procédé selon l'une quelconque des revendications 1 à 4, dans lequel la demande de protocole SIP est une demande de message SIP « SIP MESSAGE ».

8. Procédé selon l'une quelconque des revendications précédentes, comprenant l'étape consistant à stocker l'état de noeud connexe à ces noeuds identifiés par l'identifiant URI de demande de protocole SIP.

9. Procédé selon l'une quelconque des revendications précédentes, dans lequel le réseau est un système universel de télécommunications mobiles comprenant un sous-système multimédia IP, IMS.

10. Système de noeuds destiné à distribuer des informations d'état de noeud dans un réseau de télécommunications qui utilise le protocole d'ouverture de session, SIP, le système étant **caractérisé en ce qu'**il comprend :
(a) un moyen pour partager un identifiant de ressource uniforme, URI, de protocole SIP d'état de noeud, parmi une pluralité de noeuds, l'identifiant URI de protocole SIP d'état de noeud représentant un groupe de noeuds qui souhaitent recevoir des mises à jour d'informations d'état de noeud des noeuds de la pluralité ; et
au niveau d'un premier noeud de la pluralité, un moyen pour :
(b) (i) recevoir l'identifiant URI de protocole SIP d'état de noeud ; et
(b) (ii) envoyer une demande de protocole SIP, comprenant des informations d'état de noeud, destinée à tous les noeuds dans le groupe représentés par l'identifiant URI de protocole SIP d'état de noeud, où l'identifiant URI de protocole SIP d'état de noeud est utilisé en tant que l'identifiant URI de demande de la demande de protocole SIP de manière à identifier la demande de protocole SIP comme comprenant des informations d'état de noeud et à identifier le groupe de destinataires prévus des informations d'état de noeud ; et
au niveau d'un second noeud, un moyen pour :
(c) (i) recevoir la demande de protocole SIP avec les informations d'état de noeud et l'identifiant URI de protocole SIP d'état de noeud ;
(c) (ii) déterminer les destinataires prévus des informations d'état de noeud à partir de l'identifiant URI de protocole SIP d'état de noeud ; et
(c) (iii) acheminer les informations d'état de noeud aux destinataires déterminés ou utiliser les informations d'état de noeud au niveau du second noeud si le second noeud est déterminé comme étant l'un des destinataires prévus.
